# FASCICULE DE BREVET EUROPEEN

(11) **EP 3 607 293 B1**
(45) Date de publication et mention de la délivrance du brevet: **01.12.2021**
(21) Numéro de dépôt: 18713294.9
(22) Date de dépôt: 03.04.2018
(51) Int. Cl.: G01M 7/08, G01M 17/007

(54) **DISPOSITIF D'ESSAI MOBILE POUR TEST DYNAMIQUE DE VÉHICULE**
BEWEGLICHE PRÜFVORRICHTUNG FÜR DYNAMISCHE FAHRZEUGPRÜFUNG
MOVABLE TEST DEVICE FOR DYNAMIC VEHICLE TESTING

(30) Priorité: 07.04.2017 FR 1753054
(43) Date de publication de la demande: 12.02.2020
(73) Titulaire: Autoliv Development AB, 447 83 Vårgårda (SE)
(72) Inventeur: GUSTAFSSON, Per, 44734 Vargarda (SE)
(74) Mandataire: Poindron, Cyrille
(86) Numéro de dépôt international: PCT/EP2018/058432
(87) Numéro de publication internationale: WO 2018/185073

(56) Documents cités:
- EP-A1- 2 845 775
- WO-A2-2018/007458
- FR-A1- 2 306 097
- FR-A1- 2 961 748
- FR-A1- 3 041 754
- FR-A5- 2 093 197
- US-A1- 2013 162 479

## Description

La présente invention concerne de manière générale un dispositif d'essai agencé pour rouler sur une piste d'essai également parcourue par un véhicule automobile à tester. En particulier, le dispositif d'essai selon l'invention est destiné à porter une cible ou un objet faisant partie du test dynamique avec le véhicule de test. En particulier, l'invention concerne un plateau qui supporte une cible (un mannequin représentant un piéton, ou une maquette simplifiée de véhicule) qui doit se déplacer sur la piste pour simuler une situation de roulage avec des obstacles mobiles (à éviter ou à percuter) pour le véhicule test.

Il est connu dans l'art antérieur des dispositifs pour réaliser de tels essais, tel que celui divulgué dans le document US2016054199. En contrepartie, ce système présente notamment l'inconvénient de rebondir ou former un obstacle franc lors du test si le véhicule test touche le dispositif.

Le document US 2013162479 A1 divulgue un dispositif d'essai avec un plateau et des moyens de suspensions pneumatiques pour régler une hauteur. De tels moyens de suspensions pneumatiques réglables en hauteur sont donc des vérins pneumatiques et provoquent des rebonds lorsqu'un choc est appliqué au plateau (lorsqu'un véhicule de test percute un objet fixé au plateau ou roule sur le plateau), si bien que de tels rebonds peuvent provoquer une collision entre le plateau et le véhicule de test. Un autre exemple de dispositif d'essai avec un plateau est décrit par le document EP2845775 A1.

Un but de la présente invention est de répondre aux inconvénients de l'art antérieur mentionnés ci-dessus et en particulier, tout d'abord, de proposer un dispositif d'essai mobile pour effectuer un test dynamique avec un véhicule test, tout en limitant les risques de rebond ou d'endommagement pour le véhicule test lors du test dynamique et en améliorant la motricité du dispositif d'essai.

Pour cela un premier aspect de l'invention concerne un dispositif d'essai mobile, selon la revendication 1, pour test dynamique de véhicule, destiné à supporter un objet cible pour le véhicule de test, le dispositif comprenant :
- un châssis avec un plateau support agencé pour recevoir l'objet cible,
- une pluralité de trains roulant avec chacun au moins une roue, agencée pour rouler sur un plan de roulage formé par une piste d'essai,
- des moyens de propulsion, en liaison avec au moins une des roues pour propulser le dispositif sur le plan de roulage,
De plus, le dispositif d'essai comprend des moyens d'amortissement, agencés pour amortir un mouvement relatif entre au moins une des roues et le plateau support. Le dispositif d'essai selon la présente mise en œuvre comprend des moyens d'amortissement, au contraire des dispositifs de l'art antérieur, si bien que les vibrations ou chocs, dus au déplacement ou à un éventuel contact avec le véhicule de test, seront amortis ce qui réduit notablement les possibilités de rebond, et augmente les capacités de dissipation d'énergie. Les moyens d'amortissement sont destinés à dissiper une énergie au cours du mouvement du plateau par rapport à la roue, et ne sont pas assimilable à de simples moyens de suspension qui procurent simplement une capacité de mouvement de la roue par rapport au plateau avec un retour en position généralement effectué par un moyen élastique (un ressort, un vérin à gaz...).

En particulier, des moyens conventionnels de suspension pneumatique ne réduisent pas efficacement une amplitude d'oscillation, car ce sont de simples vérins formant des ressorts à gaz. Ils ne comprennent pas de restriction placée entre deux chambres, qui dissiperait de l'énergie pour amortir ces oscillations. En effet, une telle restriction est source de pertes d'énergie et n'est surtout pas intégrée, en particulier si les suspensions pneumatiques sont réglables en hauteur, car cela nécessiterait une augmentation de la puissance de la pompe pneumatique accouplée aux moyens de suspension réglables en hauteur pour les commander. L'invention, en proposant des moyens d'amortissement, se distingue des ces moyens de suspension pneumatique, car l'effet ressort est supprimé.

De plus, on ne peut pas considérer que des roues équipées de pneumatiques forment des moyens d'amortissement. En effet, une roue avec un pneumatique rebondit sur le sol, et n'amortit pas un choc.

Avantageusement, le plateau support forme un plan support, généralement parallèle au plan de roulage.

Selon la revendication 1, le dispositif est tel qu' au moins un des trains roulant comprend :
- un bras oscillant embarquant une des roues, et articulé sur le châssis,
- des moyens de suspension, avec une première extrémité articulée sur le châssis,
- un basculeur, avec une première extrémité articulée sur le châssis et une deuxième extrémité reliée à une deuxième extrémité des moyens de suspension,
- une biellette, reliant le bras oscillant au basculeur,
dans lequel la biellette présente une extrémité fixée sur le basculeur, entre la première extrémité du basculeur et la deuxième extrémité du basculeur. Le train roulant selon cette mise en œuvre permet de procurer une grande course aux moyens de suspension, même si le déplacement du bras oscillant est faible, en raison de la fixation de la biellette sur le basculeur.

Autrement dit, une projection de l'articulation biellette/basculeur sur une droite reliant les articulations basculeur/châssis et basculeur/moyens de suspension se trouve entre les articulations basculeur/châssis et basculeur/moyens de suspension.

Toujours selon la revendication 1, les moyens de suspension sont embarqués sur, ou intégrés avec, ou accouplés aux moyens d'amortissement. En conséquence, la première extrémité des moyens de suspension est également la première extrémité des moyens d'amortissement, et la deuxième extrémité des moyens de suspension est également la deuxième extrémité des moyens d'amortissement.

Avantageusement, les moyens de suspension forment avec les moyens d'amortissement un combiné ressort-amortisseur. Un tel combiné ressort - amortisseur est compact tout en nécessitant peu d'entretien.

Avantageusement, dans une projection sur le plan de roulage ou sur le plan support, l'articulation du basculeur sur le châssis est agencée entre l'articulation du bras oscillant sur le châssis et la première extrémité des moyens de suspension. En d'autres termes, le bras oscillant et les moyens de suspension (et d'amortissement) sont agencés de part et d'autre du basculeur, ce qui procure une mise en œuvre de faible épaisseur ou de faible hauteur totale.

Avantageusement, l'articulation de la première extrémité des moyens de suspension ou d'amortissement présente un axe de pivot qui est situé dans un plan P1 parallèle au plan support ou au plan de roulage, qui est à moins de 20 mm et plus préférentiellement à moins de 10 mm d'un plan P2 contenant un axe de pivot de l'articulation du bras oscillant sur le châssis, lui aussi parallèle au plan support ou au plan de roulage.

Avantageusement, un plan contenant un axe de pivot de l'articulation du basculeur est agencé au dessus des plans P1 et P2, mais à moins de 50 mm et préférentiellement moins de 40 mm de ces derniers.

Avantageusement, un plan P'3 vertical (ou perpendiculaire au plan de roulage ou au plan de support) contenant l'axe de pivot de l'articulation du basculeur est agencé entre un plan P'1 vertical (ou perpendiculaire au plan de roulage PR ou au plan de support PS) contenant l'axe de pivot de l'articulation de la première extrémité des moyens de suspension ou d'amortissement et un plan P'2 vertical (ou perpendiculaire au plan de roulage PR ou au plan de support PS) contenant l'axe de pivot de l'articulation du bras oscillant sur le châssis.

Autrement dit, les moyens d'amortissement sont articulés sur le châssis par un point d'ancrage distinct de celui du bras oscillant, ce qui laisse une plus grande liberté de conception, pour obtenir un dispositif plat.

Avantageusement, les moyens de suspension sont sensiblement parallèles au plan de roulage et/ou au plateau support (ou le plan support). Comme ci-dessus, cela procure une mise en œuvre de faible épaisseur ou de faible hauteur totale.

Avantageusement, l'articulation des moyens de suspension, l'articulation du basculeur et l'articulation du bras oscillant sont toutes agencées entre deux plans parallèles au plan de roulage (ou au plan de support) et distants d'une distance prédéterminée inférieure à un diamètre extérieur des moyens de suspension. Comme ci-dessus, cela procure une mise en œuvre de faible épaisseur ou de faible hauteur totale. Par exemple, la distance prédéterminée est inférieure ou égale à 80 mm.

Avantageusement, le diamètre extérieur des moyens de suspension est un diamètre d'un ressort hélicoïdal formant les moyens de suspension.

Avantageusement, la deuxième extrémité des moyens de suspension est située sous un plan parallèle au plan de roulage ou au plan support, et passant par l'articulation du basculeur sur le châssis ; étant entendu que le « sous » s'entend lorsque le dispositif est dans sa position de roulage, c'est-à-dire lorsque les roues sont en contact avec le plan de roulage. Ainsi, le plan parallèle au plan de roulage ou au plan support, et passant par l'articulation du basculeur sur le châssis est situé au-dessus du plan de roulage et la deuxième extrémité des moyens de suspension est donc située entre le plan de roulage et le plan parallèle au plan de roulage passant par l'articulation du basculeur sur le châssis. Une telle mise en œuvre procure une grande compacité, car les moyens d'amortissement sont sous l'articulation du basculeur sur le châssis. Les moyens d'amortissement ne sont alors pas en protubérance.

Avantageusement, les deux extrémités des moyens de suspension sont situées sous un plan parallèle au plan de roulage ou au plan support, et passant par l'articulation du basculeur sur le châssis. Une telle mise en œuvre procure compacité, car les moyens d'amortissement sont sous l'articulation du basculeur sur le châssis. Les moyens d'amortissement ne sont alors pas en protubérance.

Avantageusement, une enveloppe contenant entièrement les moyens de suspension et les moyens d'amortissement est située sous un plan parallèle au plan de roulage ou au plan support, et passant par l'articulation du basculeur sur le châssis

Avantageusement, la première extrémité du basculeur est montée en liaison pivot sur le châssis.

Avantageusement, la première extrémité des moyens de suspension est montée en liaison pivot sur le châssis.

Avantageusement, le bras oscillant est monté en liaison pivot sur le châssis.

Avantageusement les axes des liaisons pivot du bras oscillant, des moyens de suspension et du basculeur sur le châssis sont parallèles entre eux.

Avantageusement, la biellette est montée sur le bras oscillant à une distance prédéterminée de l'articulation du bras oscillant sur le châssis. Un tel bras de levier permet de renvoyer le déplacement du bras oscillant vers le basculeur. En d'autres termes, la biellette est montée sur le bras oscillant à une distance (strictement positive), de sorte à créer un bras de levier (la biellette n'est pas alignée avec l'axe de rotation du bras oscillant sur le châssis).

Avantageusement, le dispositif comprend une chape agencée entre la deuxième extrémité des moyens de suspension et le basculeur. Une telle chape est donc une monture métallique portant l'axe d'une pièce pivotante. En particulier, la chape permet d'éviter que le système ne soit hyperstatique, en ajoutant une liaison pivot entre la deuxième extrémité des moyens de suspension et le basculeur.

Avantageusement, le basculeur est mobile entre deux positions, et peut présenter une position intermédiaire perpendiculaire au plan de roulage ou au plan support.

Avantageusement, le bras oscillant est mobile entre deux positions, et une droite passant par l'articulation du bras oscillant avec le châssis et par une articulation entre le bras oscillant et la biellette peut présenter une position intermédiaire perpendiculaire au plan de roulage ou au plan support.

Avantageusement, l'articulation des moyens de suspension sur le châssis, l'articulation du basculeur sur le châssis et l'articulation du bras oscillant sur le châssis sont toutes des liaisons pivot, chacune définissant un axe de pivot perpendiculaire à un même plan perpendiculaire au plan de roulage. En d'autres termes, tous les axes de pivot sont parallèles entre eux.

Avantageusement, l'articulation des moyens de suspension sur le châssis, l'articulation du basculeur sur le châssis et l'articulation du bras oscillant sur le châssis sont agencées pour être coupées par un même plan de coupe plan perpendiculaire au plan de roulage. Autrement dit, les organes sont sensiblement en ligne et tous agencés les uns derrière les autres, pour procurer une faible hauteur totale.

Avantageusement, le plateau support est agencé pour pouvoir passer sous le véhicule de test sans le toucher. Il est donc important de minimiser les rebonds pour éviter toute collision entre le dispositif et le châssis, les soubassements, pare chocs ou organes sous plancher (conduites de carburant, de freinage) d'un véhicule de test qui passe au dessus, ce qui est rendu possible par les moyens d'amortissement. Cette combinaison ou ajout de moyens d'amortissement avec un plateau ou dispositif aussi fin va à l'encontre du besoin de diminuer la hauteur totale pour pouvoir passer sous des véhicules de plus en plus bas.

Avantageusement, les moyens d'amortissement comprennent des moyens de réglage pour régler une vitesse de détente et/ou une vitesse de compression et/ou un amortissement de détente et/ou un amortissement de compression.

D'autres caractéristiques et avantages de la présente invention apparaîtront plus clairement à la lecture de la description détaillée qui suit d'un mode de réalisation de l'invention donné à titre d'exemple nullement limitatif et illustré par les dessins annexés, dans lesquels :
- la figure 1 représente une vue isométrique d'un dispositif d'essai selon l'invention ;
- la figure 2 représente une vue isométrique d'un train roulant du dispositif d'essai de la figure 1 ;
- la figure 3 représente une coupe selon un plan vertical d'un train roulant du dispositif d'essai de la figure 1.

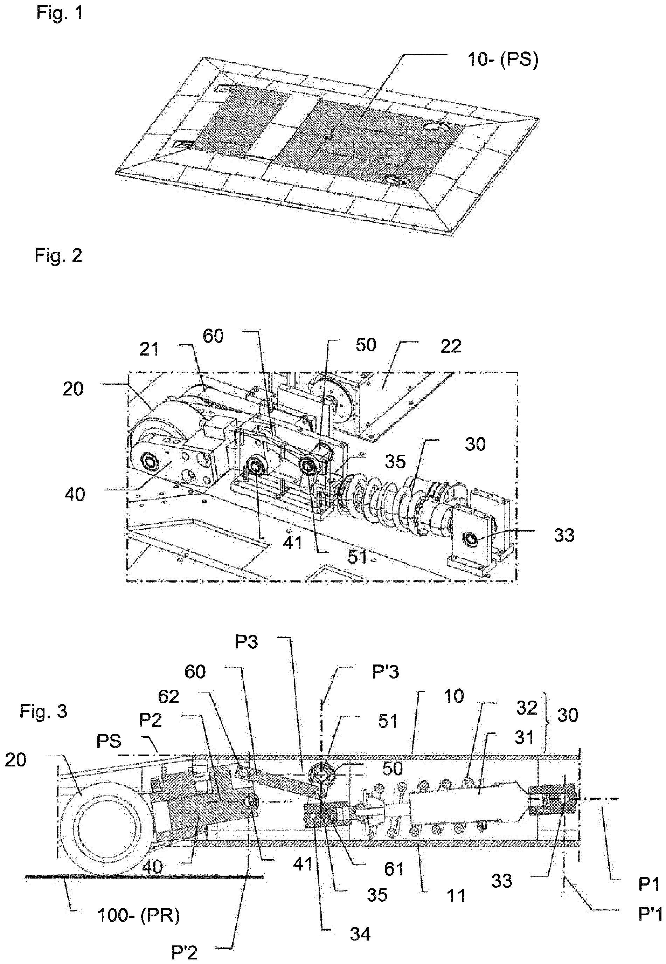

La figure 1 représente un dispositif d'essai selon l'invention, qui présente une forme aplatie avec un plateau support 10 qui forme un plan support PS. Le dispositif d'essai de la figure 1 comprend quatre trains roulant avec chacun une roue 20 pour pouvoir rouler sur une piste d'essai (formant un plan de roulage PR représenté figure 3), et au moins une des roues est motorisée pour pouvoir déplacer le dispositif d'essai sur la piste d'essai.

Typiquement, le dispositif d'essai peut embarquer sur son plateau 10 un mannequin, et le déplace sur la piste d'essai pour servir de cible à un véhicule de test. On peut par exemple vérifier que des systèmes de détection du véhicule de test vont effectivement détecter le mannequin et activer un freinage d'urgence lorsque le dispositif d'essai coupe volontairement la route du véhicule de test. On peut aussi embarquer sur le plateau 10 une maquette de véhicule pour simuler une collision, ou vérifier une fois encore que des détecteurs du véhicule de test vont détecter la maquette... On notera que le dispositif d'essai selon l'invention n'est pas destiné à véhiculer des occupants, mais simplement à déplacer des objets de test, si bien qu'il s'agit d'un dispositif de manutention.

Lors de ces tests avec le véhicule de test, il faut minimiser les vibrations sur le mannequin embarqué, ou garantir que des chocs imposés par le véhicule de test ne vont pas faire rebondir le dispositif d'essai ou endommager le véhicule de test.

A cet effet, et comme le montrent les figures 2 et 3, les trains roulant du véhicule comprennent un bras oscillant 40 et un mécanisme décrit ci-dessous qui relie le bras oscillant 40 à des moyens d'amortissement 30 (sous la forme d'un amortisseur 31). En conséquence, les mouvements de chaque roue 20 par rapport au plateau 10 sont amortis, ce qui minimise les vibrations imposées à l'objet cible embarqué, la stabilité est donc améliorée, et cela évite aussi que le dispositif rebondisse en cas de choc, puisque l'énergie est dissipée par les moyens d'amortissement 30. On peut prévoir des moyens de réglage de l'amortissement, aussi bien en détente qu'en compression, en fonction des besoins de test.

De plus, les moyens d'amortissement comprennent des moyens de suspension sous la forme d'un ressort 32, pour former un combiné ressort - amortisseur.

De plus, le dispositif d'essai doit être aussi plat que possible, et à cet effet, l'invention propose un mécanisme de renvoi entre le bras oscillant et les moyens d'amortissement 30.

En particulier, la figure 2 et la figure 3 montrent que chaque train roulant comprend donc le bras oscillant 40, mais également un basculeur 50 et une biellette 60. Le basculeur 50 est monté à une extrémité en liaison pivot par rapport au plateau 10 et au châssis du dispositif d'essai, au niveau d'une liaison pivot 51, tout comme le bras oscillant 40 au niveau d'une liaison pivot 41, et une première extrémité des moyens d'amortissement 30 au niveau d'une liaison pivot 33. L'autre extrémité du basculeur 50 est reliée aux moyens d'amortissement 30 par une liaison pivot 34 par une chape 35.

La biellette 60 est quand à elle agencée pour transmettre les mouvements du bras oscillant 40 au basculeur 50, en étant articulée à ces composants respectivement par des liaisons pivot 62 et 61. La liaison pivot 61 de la biellette 60 sur le basculeur 50 est agencée entre les deux extrémités du basculeur 50, c'est-à-dire entre les liaisons pivot 51 et 34. En conséquence, les mouvements du bras oscillant 40 transmis aux moyens d'amortissement 30 sont amplifiés.

De plus, comme le montre la figure 3, le système est particulièrement compact car le basculeur 50 est agencé entre le bras oscillant 40 et les moyens d'amortissement 30, qui sont eux même montés sensiblement parallèles au plan support PS, ou au plan de roulage PR. En conséquence, tout le mécanisme est contenu entre deux plans parallèles et distants de moins de 80 mm. De plus, la liaison pivot 33 présente un axe de pivot qui est situé dans un plan P1 parallèle au plan support PS ou au plan de roulage PR, qui est à moins de 20 mm et plus préférentiellement à moins de 10 mm d'un plan P2 contenant un axe de pivot de la liaison pivot 41, lui aussi parallèle au plan support PS ou au plan de roulage PR.

Par ailleurs, un plan P3 contenant un axe de pivot de la liaison pivot 51 est agencé au dessus des plans P1 et P2, mais à moins de 50 mm et préférentiellement moins de 40 mm de ces derniers.

De plus, un plan P'3 vertical (ou perpendiculaire au plan de roulage PR ou au plan de support PS) contenant l'axe de pivot de la liaison pivot 51 est agencé entre un plan P'1 vertical (ou perpendiculaire au plan de roulage PR ou au plan de support PS) contenant l'axe de pivot de la liaison pivot 33 et un plan P'2 vertical (ou perpendiculaire au plan de roulage PR ou au plan de support PS) contenant l'axe de pivot de la liaison pivot 41.

Enfin, tout le mécanisme est prévu pour que le basculeur 50, dans toute la plage de débattement prévue, puisse passer par une position verticale, de même qu'une droite passant par les axes 41 et 62. Les axes de pivotement du bras oscillant 40, du basculeur 50 et de la première extrémité des moyens d'amortissement 30 sont tous parallèles.

En conséquence, le dispositif d'essai reste compact et plat, et sa hauteur totale ne dépasse pas 120 mm, l'épaisseur du plateau (entre le plateau 10 et la plaque inférieure 11 du dispositif) restant quant à elle inférieure ou égale à 90 mm. Cette faible hauteur permet au dispositif d'essai de passer sous un véhicule de test, et sa capacité d'amortissement permet d'éviter les rebonds, si bien que même si le véhicule de test roule sur le dispositif d'essai selon l'invention, ce dernier ne touchera pas le châssis du véhicule de test grâce à sa faible hauteur, et à sa capacité d'amortissement.

Enfin, on peut remarquer figure 2 que la roue 20 est motorisée par un moteur 22 qui entraîne une courroie crantée 21 engagée avec la roue 20, afin de permettre au dispositif d'essai de se déplacer sur la piste d'essais de manière autonome.

On comprendra que diverses modifications et/ou améliorations évidentes pour l'homme du métier peuvent être apportées aux différents modes de réalisation de l'invention décrits dans la présente description sans sortir du cadre de l'invention défini par les revendications annexées. En particulier, les montages en liaisons pivot des différents organes peuvent être remplacés par des liaisons rotule si besoin.

## Revendications

1. Dispositif d'essai mobile pour test dynamique de véhicule, destiné à supporter un objet cible pour le véhicule testé, le dispositif comprenant :
- un châssis avec un plateau support (10) agencé pour recevoir l'objet cible,
- une pluralité de trains roulants avec chacun au moins une roue, agencée pour rouler sur un plan de roulage (PR) formé par une piste d'essai,
- des moyens de propulsion, en liaison avec au moins une des roues (20) pour propulser le dispositif sur le plan de roulage (PR),
**caractérisé en ce qu'**au moins un des trains roulant comprend :
- un bras oscillant (40) embarquant une des roues (20), et articulé sur le châssis,
- des moyens de suspension, avec une première extrémité articulée sur le châssis,
- des moyens d'amortissement (30), agencés pour amortir un mouvement relatif entre au moins une des roues (20) et le plateau support (10), dans lequel les moyens de suspension sont embarqués sur, ou intégrés avec, ou accouplés aux moyens d'amortissement (30), de sorte que la première extrémité des moyens de suspension est également la première extrémité des moyens d'amortissement (30), et une deuxième extrémité des moyens de suspension est également une deuxième extrémité des moyens d'amortissement,
- un basculeur (50), avec une première extrémité articulée sur le châssis et une deuxième extrémité reliée à la deuxième extrémité des moyens de suspension,
- une biellette (60), reliant le bras oscillant (40) au basculeur (50),
dans lequel la biellette (60) présente une extrémité liée au basculeur (50),
entre la première extrémité du basculeur (50) et la deuxième extrémité du basculeur (50).

2. Dispositif selon la revendication précédente, dans lequel les moyens de suspension forment avec les moyens d'amortissement (30) un combiné ressort-amortisseur.

3. Dispositif selon l'une des revendications 1 à 2, dans lequel dans une projection sur le plan de roulage (PR), l'articulation du basculeur (50) sur le châssis est agencée entre l'articulation du bras oscillant (40) sur le châssis et la première extrémité des moyens de suspension.

4. Dispositif selon l'une des revendications 1 à 3, dans lequel la deuxième extrémité des moyens de suspension est située sous un plan parallèle au plan de roulage (PR) et passant par l'articulation du basculeur (50) sur le châssis.

5. Dispositif selon l'une des revendications 1 à 4, dans lequel les deux extrémités des moyens de suspension sont situées sous un plan parallèle au plan de roulage (PR) et passant par l'articulation du basculeur (50) sur le châssis.

6. Dispositif selon l'une des revendications 1 à 5, dans lequel une enveloppe contenant entièrement les moyens de suspension est située sous un plan parallèle au plan de roulage (PR) et passant par l'articulation du basculeur (50) sur le châssis.

7. Dispositif selon l'une des revendications 1 à 6, dans lequel l'articulation des moyens de suspension, l'articulation du basculeur (50) et l'articulation du bras oscillant (40) sont toutes agencées entre deux plans parallèles au plan de roulage (PR) et distants d'une distance prédéterminée inférieure à un diamètre extérieur des moyens de suspension.

8. Dispositif selon la revendication précédente, dans lequel le diamètre extérieur des moyens de suspension est un diamètre d'un ressort hélicoïdal formant les moyens de suspension.

9. Dispositif selon l'une des revendications 1 à 8, dans lequel la biellette (60) est montée sur le bras oscillant (40) à une distance prédéterminée de l'articulation du bras oscillant (40) sur le châssis.

10. Dispositif selon l'une des revendications 1 à 9, comprenant une chape agencée entre la deuxième extrémité des moyens de suspension et le basculeur (50).

11. Dispositif selon l'une des revendications 1 à 10, dans lequel le basculeur (50) est mobile entre deux positions, et peut présenter une position intermédiaire perpendiculaire au plan de roulage (PR).

12. Dispositif selon l'une des revendications 1 à 11, dans lequel le bras oscillant (40) est mobile entre deux positions, et une droite passant par l'articulation du bras oscillant (40) avec le châssis et par une articulation entre le bras oscillant et la biellette (60) peut présenter une position intermédiaire perpendiculaire au plan de roulage (PR).

13. Dispositif selon l'une des revendications précédentes, dans lequel le plateau support (10) est agencé pour pouvoir passer sous le véhicule à tester sans le toucher.

14. Dispositif selon l'une des revendications précédentes, dans lequel les moyens d'amortissement (30) comprennent des moyens de réglage pour régler une vitesse de détente et/ou une vitesse de compression et/ou un amortissement de détente et/ou un amortissement de compression.

## Patentansprüche

1. Mobile Testvorrichtung für einen dynamischen Test eines Fahrzeugs, die dazu bestimmt ist, ein Zielobjekt für das getestete Fahrzeug zu tragen, wobei die Vorrichtung umfasst:
- ein Gestell mit einer Trägerplatte (10), die zur Aufnahme des Zielobjekts angeordnet ist,
- eine Vielzahl von Fahrwerken mit jeweils mindestens einem Rad, die so angeordnet sind, dass sie auf einer von einer Teststrecke gebildeten Lauffläche (plan de roulage - PR) laufen,
- Antriebsmittel in Verbindung mit mindestens einem der Räder (20) zum Antreiben der Vorrichtung auf der Lauffläche (PR),
**dadurch gekennzeichnet, dass** mindestens eines der Fahrwerke Folgendes umfasst:
- einen Schwingarm (40), der eines der Räder (20) umgreift und am Gestell angelenkt ist,
- Aufhängungsmittel, deren erstes Ende am Gestell angelenkt ist,
- Dämpfungsmittel (30), die so angeordnet sind, dass sie die Relativbewegung zwischen mindestens einem der Räder (20) und der Trägerplatte (10) dämpfen, wobei die Aufhängungsmittel die Dämpfungsmittel (30) umgreifen oder mit diesen integriert oder gekoppelt sind, so dass das erste Ende der Aufhängungsmittel auch das erste Ende der Dämpfungsmittel (30) ist und ein zweites Ende der Aufhängungsmittel auch ein zweites Ende der Dämpfungsmittel ist,
- einen Kipphebel (50), dessen erstes Ende am Gestell angelenkt ist und dessen zweites Ende mit dem zweiten Ende der Aufhängungsmittel verbunden ist,
- einen Stangenhebel (60), der den Schwingarm (40) mit dem Kipphebel (50) verbindet, wobei der Stangenhebel (60) ein Ende aufweist, das mit dem Kipphebel (50) zwischen dem ersten Ende des Kipphebels (50) und dem zweiten Ende des Kipphebels (50) verbunden ist.

2. Vorrichtung nach dem vorhergehenden Anspruch, wobei die Aufhängungsmittel mit den Dämpfungsmitteln (30) eine Feder-Dämpfer-Kombination bilden.

3. Vorrichtung nach einem der Ansprüche 1 bis 2, wobei in einem Vorsprung in die Lauffläche (PR) die Anlenkung des Kipphebels (50) am Gestell zwischen der Anlenkung des Schwingarms (40) am Gestell und dem ersten Ende der Aufhängungsmittel angeordnet ist.

4. Vorrichtung nach einem der Ansprüche 1 bis 3, wobei sich das zweite Ende der Aufhängungsmittel unter einer Fläche befindet, die parallel zur Lauffläche (PR) verläuft und die Anlenkung des Kipphebels (50) am Gestell passiert.

5. Vorrichtung nach einem der Ansprüche 1 bis 4, wobei sich die zwei Enden der Aufhängungsmittel unter einer Fläche befinden, die parallel zur Lauffläche (PR) verläuft und die Anlenkung des Kipphebels (50) am Gestell passiert.

6. Vorrichtung nach einem der Ansprüche 1 bis 5, wobei sich eine Umhüllung, die die gesamten Aufhängungsmittel enthält, unter einer Fläche befindet, die parallel zur Lauffläche (PR) verläuft und die Anlenkung des Kipphebels (50) am Gestell passiert.

7. Vorrichtung nach einem der Ansprüche 1 bis 6, wobei die Anlenkung der Aufhängungsmittel, die Anlenkung des Kipphebels (50) und die Anlenkung des Schwingarms (40) alle zwischen zwei Flächen angeordnet sind, die parallel zur Lauffläche (PR) verlaufen und um einen vorbestimmten Abstand voneinander beabstandet sind, der geringer als ein Außendurchmesser der Aufhängungsmittel ist.

8. Vorrichtung nach dem vorhergehenden Anspruch, wobei der Außendurchmesser der Aufhängungsmittel ein Durchmesser einer Schraubenfeder ist, die die Aufhängungsmittel bildet.

9. Vorrichtung nach einem der Ansprüche 1 bis 8, wobei der Stangenhebel (60) an dem Schwingarm (40) in einem vorbestimmten Abstand von der Anlenkung des Schwingarms (40) am Gestell montiert ist.

10. Vorrichtung nach einem der Ansprüche 1 bis 9, umfassend einen Gabelkopf, der zwischen dem zweiten Ende der Aufhängungsmittel und dem Kipphebel (50) angeordnet ist.

11. Vorrichtung nach einem der Ansprüche 1 bis 10, wobei der Kipphebel (50) zwischen zwei Positionen beweglich ist und eine Zwischenposition senkrecht zur Lauffläche (PR) aufweisen kann.

12. Vorrichtung nach einem der Ansprüche 1 bis 11, wobei der Schwingarm (40) zwischen zwei Positionen beweglich ist und eine passierende Gerade durch die Anlenkung des Schwingarms (40) mit dem Gestell und durch eine Anlenkung zwischen dem Schwingarm und dem Stangenhebel (60) eine Zwischenposition senkrecht zur Lauffläche (PR)aufweisen kann.

13. Vorrichtung nach einem der vorhergehenden Ansprüche, wobei die Trägerplatte (10) so angeordnet ist, dass sie unterhalb des zu testenden Fahrzeugs passieren kann, ohne es zu berühren.

14. Vorrichtung nach einem der vorhergehenden Ansprüche, wobei die Dämpfungsmittel (30) Einstellmittel zum Einstellen einer Entspannungsgeschwindigkeit und/oder einer Kompressionsgeschwindigkeit und/oder einer Entspannungsdämpfung und/oder einer Kompressionsdämpfung umfassen.

## Claims

1. Mobile test device for dynamic vehicle testing, for supporting a target object for the vehicle being tested, the device comprising:
- a chassis with a support plate (10) arranged so as to receive the target object,
- a plurality of running gears each with at least one wheel which is arranged so as to roll on a rolling plane (PR) formed by a test track,
- propulsion means connected to at least one of the wheels (20) for propelling the device on the rolling plane (PR),
**characterized in that** at least one of the running gears comprises:
- a swinging arm (40) which carries one of the wheels (20) and is articulated on the chassis,
- suspension means with a first end articulated on the chassis,
- damping means (30) which are arranged so as to damp a relative movement between at least one of the wheels (20) and the support plate (10), wherein the suspension means are mounted on or integrated with or coupled to the damping means (30) such that the first end of the suspension means is also the first end of the damping means (30), and a second end of the suspension means is also a second end of the damping means,
- a rocker (50) with a first end articulated on the chassis and a second end connected to the second end of the suspension means,
- a connecting rod (60) connecting the swinging arm (40) to the rocker (50),
wherein the connecting rod (60) has one end connected to the rocker (50), between the first end of the rocker (50) and the second end of the rocker (50).

2. Device according to the preceding claim, wherein the suspension means form a combined spring-damper with the damping means (30).

3. Device according to either claim 1 or claim 2, wherein, in a projection on the rolling plane (PR), the articulation of the rocker (50) on the chassis is arranged between the articulation of the swinging arm (40) on the chassis and the first end of the suspension means.

4. Device according to any of claims 1 to 3, wherein the second end of the suspension means is situated beneath a plane parallel to the rolling plane (PR) and passing through the articulation of the rocker (50) on the chassis.

5. Device according to any of claims 1 to 4, wherein the two ends of the suspension means are situated beneath a plane parallel to the rolling plane (PR) and passing through the articulation of the rocker (50) on the chassis.

6. Device according to any of claims 1 to 5, wherein a shell entirely containing the suspension means is situated beneath a plane parallel to the rolling plane (PR) and passing through the articulation of the rocker (50) on the chassis.

7. Device according to any of claims 1 to 6, wherein the articulation of the suspension means, the articulation of the rocker (50) and the articulation of the swinging arm (40) are all arranged between two planes which are parallel to the rolling plane (PR) and separated by a predetermined distance less than an outer diameter of the suspension means.

8. Device according to the preceding claim, wherein the outer diameter of the suspension means is a diameter of a coil spring forming the suspension means.

9. Device according to any of claims 1 to 8, wherein the connecting rod (60) is mounted on the swinging arm (40) at a predetermined distance from the articulation of the swinging arm (40) on the chassis.

10. Device according to any of claims 1 to 9, comprising a clevis arranged between the second end of the suspension means and the rocker (50).

11. Device according to any of claims 1 to 10, wherein the rocker (50) is movable between two positions, and can have an intermediate position perpendicular to the rolling plane (PR).

12. Device according to any of claims 1 to 11, wherein the swinging arm (40) is movable between two positions, and a line passing through the articulation of the swinging arm (40) with the chassis and through an articulation between the swinging arm and the connecting rod (60) can have an intermediate position perpendicular to the rolling plane (PR).

13. Device according to any of the preceding claims, wherein the support plate (10) is arranged so as to be able to pass under the vehicle to be tested without touching it.

14. Device according to any of the preceding claims, wherein the damping means (30) comprise adjustment means for adjusting an expansion speed and/or a compression speed and/or expansion damping and/or compression damping.
